# EUROPEAN PATENT SPECIFICATION

(11) **EP 2 818 683 B1**
(45) Date of publication and mention of the grant of the patent: **25.10.2017**
(21) Application number: 12869335.5
(22) Date of filing: 18.12.2012
(51) Int. Cl.: F02M 35/12, F02B 37/00, F04C 29/06, F02C 7/045, F04D 29/66, F04D 29/70

(54) **SILENCER FOR SUPERCHARGER**
SCHALLDÄMPFER FÜR AUFLADER
SILENCIEUX POUR COMPRESSEUR D'ALIMENTATION

(30) Priority: 20.02.2012 JP 2012034263
(43) Date of publication of application: 31.12.2014
(73) Proprietor: Mitsubishi Heavy Industries, Ltd., Tokyo 108-8215 (JP)
(72) Inventor: HIRATANI, Fumito, Tokyo 108-8215 (JP); HIRANO, Yuichiro, Tokyo 108-8215 (JP); SHIRAISHI, Keiichi, Tokyo 108-8215 (JP); IWASA, Yukihiro, Tokyo 108-8215 (JP); WADA, Yasuhiro, Tokyo 108-8215 (JP); UCHIDA, Kenji, Tokyo 108-8215 (JP); HOSOYA, Hiroyuki, Tokyo 108-8215 (JP); KOBAYASHI, Yoshihito, Tokyo 111-0036 (JP)
(74) Representative: Hoffmann Eitle
(86) International application number: PCT/JP2012/082767
(87) International publication number: WO 2013/125142

(56) References cited:
- WO-A1-01/86152
- JP-A- H1 038 259
- JP-A- H07 174 053
- JP-A- H07 174 053
- JP-A- H11 200 969
- JP-A- 2003 083 185
- JP-A- 2005 214 048
- JP-Y2- H0 741 858
- US-A- 4 204 586

## Description

### {Technical Field}

The present invention relates to a turbocharger silencer employed in, for example, a large diesel engine or the like for a ship or power generation.

### {Background Art}

In the related art, turbochargers that compress combustion air for internal combustion engines and force-feed the high-density air into combustion chambers thereof are known, and they are widely employed in, for example, large diesel engines for ships or power generation. In such a turbocharger, the compressor that compresses the combustion air and a turbocharger turbine that serves as a driving source of the compressor are coaxial and are rotated as a single unit accommodated in a housing. Note that the turbocharger turbine is driven by the energy possessed by exhaust gas from the internal combustion engine.

In such a turbocharger, in order to silence noise generated by a compressor impeller, for example, a turbocharger silencer, such as one disclosed in Japanese Unexamined Patent Application, Publication No. H11-200969 described below, has been used. This turbocharger silencer employs a configuration in which multiple sets of sound-absorbing splitters having a double-bent shape (substantially Z-shaped) are combined to serve as a silencer element (sound-absorbing body), thus maintaining silencing performance and achieving a low pressure loss.

In addition, other turbocharger silencers include ones that employ silencer elements in which sound-absorbing splitters having a curved shape are combined instead of those that are substantially Z-shaped.

WO 01/86152 A1 discloses a filter silencer which is mounted on the inlet side of a compressor and comprises a support body, several damping elements in the form of noise damping blocks and a filter frame, arranged around the circumference of the silencer. The filter frame is in the form of a perforated sheet. Sever throughflow openings are let into the noise damping blocks. The noise damping blocks may be prefabricated in the form of complete unit and may be simply assembled and disassembled. The number of components for the filter silencer is thus reduced.

JP H07 174053 A discloses a turbocharger silencer with the pre-characterizing features of claim 1 and represents the closest prior art.

### {Summary of Invention}

### {Technical Problem}

With the above-described turbocharger silencer in the related art, because the shape and structure of the silencer element are complex, there is a problem in that processing, assembly, and so forth of the silencer element become time-consuming. Considering such a background, there has been a demand for developing a low-cost turbocharger silencer with which desired sound-absorbing performance can be ensured and that can be easily manufactured.

The present invention is devised to make an improvement in the above-described circumstances, and an object thereof is to provide a turbocharger silencer with which sufficient sound-absorbing performance can be ensured and the manufacturing cost can be reduced.

### {Solution to Problem}

This object is solved by a turbocharger silencer with the features of claim 1. Preferred embodiments follow from the other claims. In order to make an improvement in the above-described circumstances, the present invention employs the following solutions.

A turbocharger silencer according to the present invention is a turbocharger silencer that is installed at an upstream side of an inlet of an intake-air introducing path for introducing intake air to be compressed at a compressor section, that absorbs noise generated at a compressor impeller, and that is equipped with the following elements: an intake-air inlet opening formed at an outer circumferential surface of a casing having a substantially cylindrical shape; an intake-air channel that guides the intake air to the intake-air introducing path by changing the flow direction of the intake air by substantially 90°, the intake air being introduced from the intake-air inlet opening; an intake-air outlet opening formed at one end surface of the casing; a sound-absorbing pipe installed in the intake-air inlet opening by being inserted thereinto from an outer side of the casing; an air hole that is substantially coaxial with the sound-absorbing pipe; and a support plate that secures and supports the sound-absorbing pipe at a predetermined position in the intake-air inlet opening.

Such a turbocharger silencer of the present invention is provided with the following elements: the intake-air inlet opening formed at the outer circumferential surface of the casing that has a substantially cylindrical shape; the intake-air channel that guides the intake air, which is introduced from the intake-air inlet opening, to the intake-air introducing path by changing the direction of the intake air by substantially 90°; the intake-air outlet opening formed at the end surface of the casing; the sound-absorbing pipe that is inserted into and installed in the intake-air inlet opening from the outer-circumference side of the casing; the air hole that is substantially coaxial with the sound-absorbing pipe; and the support plate that secures and supports the sound-absorbing pipe inserted at the predetermined position in the intake-air inlet opening. Accordingly, installation work or work for replacing the sound-absorbing pipe that serves as a silencer element (sound-absorbing body) can easily be performed by inserting or removing the sound-absorbing pipe from the outer-circumference side of the casing.

In the turbocharger silencer of the invention described above, the support plate includes an outer support plate and an inner support plate that support the sound-absorbing pipe near both ends thereof, and the end of the sound-absorbing pipe is inserted in the air hole in the inner support plate, whereas the outer support plate is detachably attached to rod-like members from outside. By doing so, it becomes easier to insert or remove the sound-absorbing pipe from the outer-circumference side of the casing by removing the outer-circumferential securing plate.

In addition, in the above-described invention, it is preferable that a curved portion be provided at an inner-circumferential angular portion of at least one of an inlet and an outlet of the sound-absorbing pipe. By doing so, it is possible to reduce pressure loss of the intake air that passes through the sound-absorbing pipe.

With the curved portions in this case, it is preferable that inward bending be applied to edges of the air holes provided in the outer support plate and the inner support plate, and, by making the shape of the ends of the sound-absorbing pipe suitable to them, it is also possible to prevent positional displacement during operation due to the engagement between them.

In the above-described invention, the sound-absorbing pipe may be a sound-absorbing pipe that is configured to have a tubular shape with a sectional structure which has at least two layers having a sound-absorbing material and an outer circumferential material that covers the outer periphery of the sound-absorbing material, or a sound-absorbing pipe that is configured to have a tubular shape with a sectional structure which has at least three layers having a reinforcing member, a sound-absorbing material provided to cover the outer periphery of the reinforcing member, and an outer circumferential material that covers the outer periphery of the sound-absorbing material, and the sound-absorbing pipe to be used should be appropriately selected.

In addition, with regard to the sound-absorbing pipe of the present invention, the sectional shape thereof may be any one of a circular sectional shape, a rectangular sectional shape, and a hexagonal sectional shape. In particular, by arranging the sound-absorbing pipes having the hexagonal sectional shape in a honeycomb arrangement, the installation space of the sound-absorbing pipes can be used most efficiently.

Also, with regard to the sound-absorbing pipe having the circular sectional shape, it is preferable that a ratio of an internal size thereof to an external size thereof be 60 to 70 %, and the internal size of the sound-absorbing pipe that is suitable in this case is a diameter of 75 mm to 130 mm. Such a sound-absorbing pipe is particularly effective when the frequency band to be silenced by using the turbocharger silencer is about 1 kHz to 2 kHz.

Note that, in the case of a sound-absorbing pipe having a rectangular sectional shape or a hexagonal sectional shape, it is preferable that a ratio of a distance between opposing sides on the interior thereof to a distance between opposing sides on the exterior thereof be 60 to 70 %, and a distance between the opposing sides on the interior of the sound-absorbing pipe that is suitable in this case is optimally 75 mm to 130 mm.

Because such a sound-absorbing pipe of a turbocharger silencer is provided with a tubular-shaped reinforcing member, the installation work or the work for replacing the sound-absorbing pipe of the turbocharger silencer can easily be performed by inserting or removing the sound-absorbing pipe from the outer-circumference side of the casing, while maintaining the sound-absorbing performance by the sound-absorbing material.

With regard to the reinforcing member, it is preferable to employ a metal mesh with reduced aerodynamic resistance in that the sound-absorbing pipe can be reinforced without hindering the sound-absorbing function of a sound-absorbing material and that it also has superior heat resistance, and it is more preferable to employ an expanded metal member, or the like. With regard to the sound-absorbing material, it is preferable to employ an inorganic fiber, such as glass wool, rock wool, or the like, because it has superior sound absorptivity and heat resistance. Also, with regard to the outer circumferential material, it is preferable to cover the sound-absorbing material with a metal foil, such as an aluminum foil or the like, because it has superior heat resistance and workability. Furthermore, a surface-covering material, such as a woven fabric, a nonwoven fabric, or the like of inorganic fibers, that is disposed between the reinforcing member and the sound-absorbing material is suitably used to prevent scattering of the inorganic fibers during air circulation. In addition, at both ends of the sound-absorbing pipe, it is desirable to provide curved shapes at inner-circumferential surfaces thereof.

### {Advantageous Effects of Invention}

With the present invention described above, because installation work and work for replacing a sound-absorbing pipe can easily be performed, it is possible to provide a turbocharger silencer with which sufficient sound-absorbing performance can be ensured, manufacturing costs can be reduced, and maintenance work can be facilitated.

### {Brief Description of Drawings}

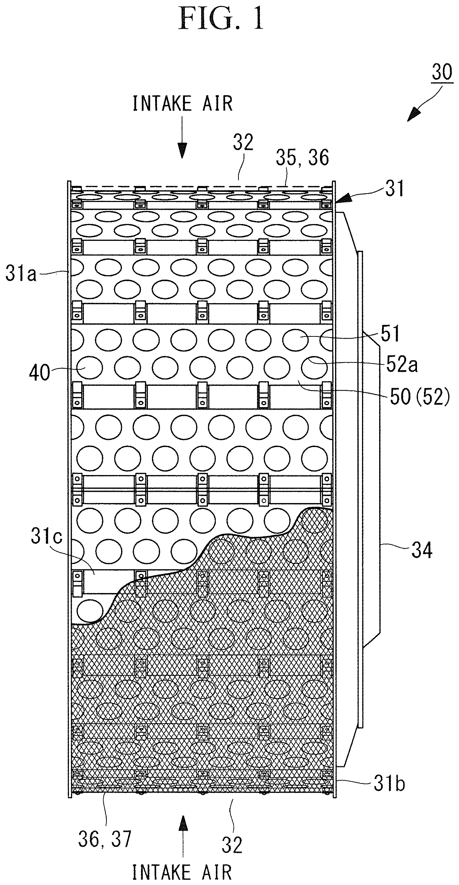

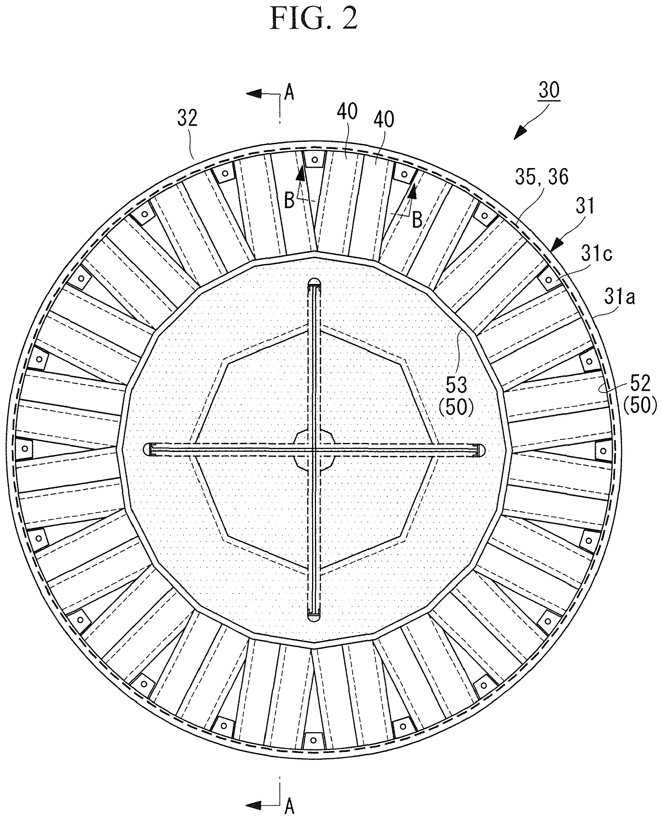

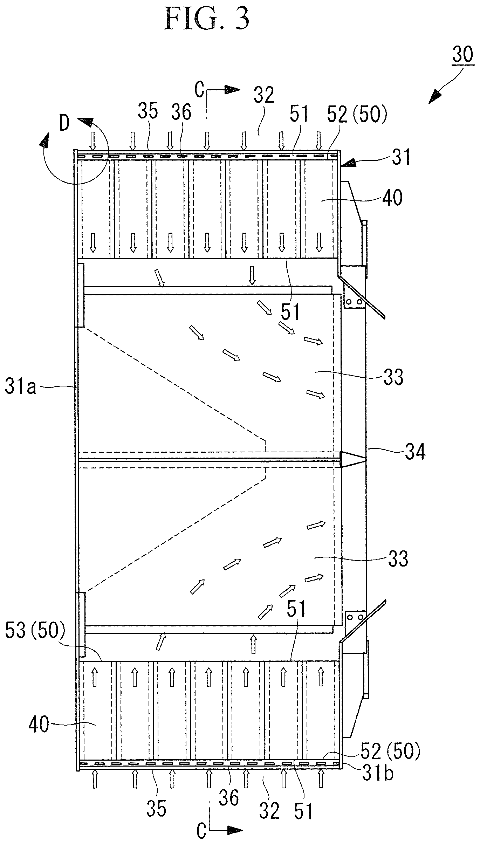

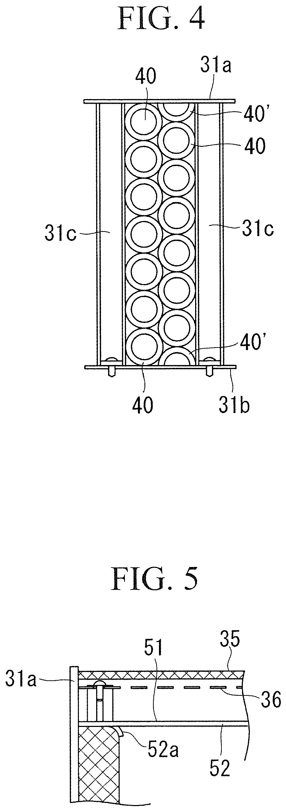

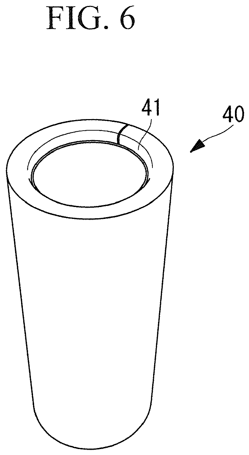

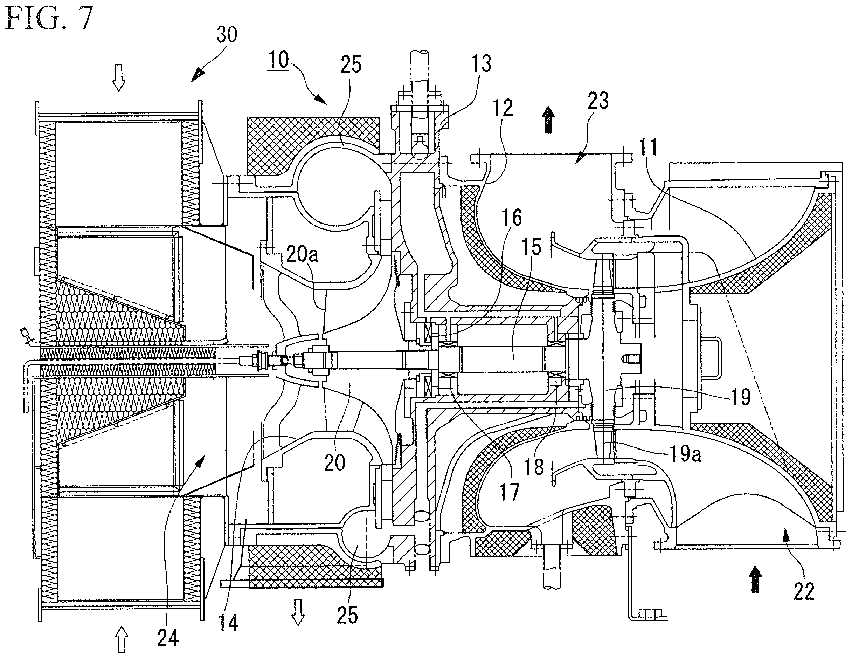

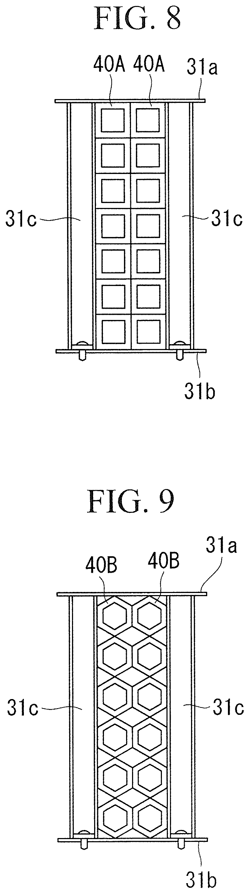

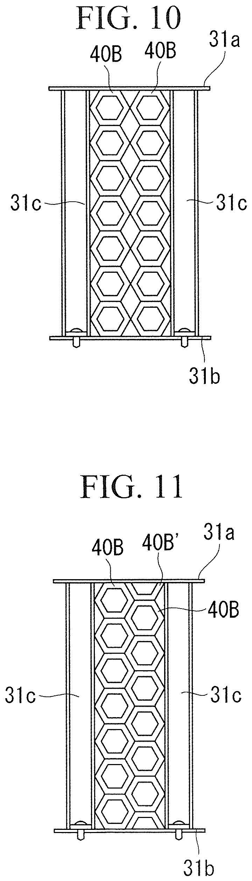

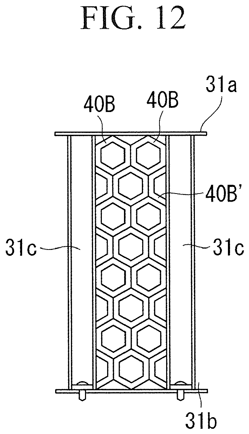

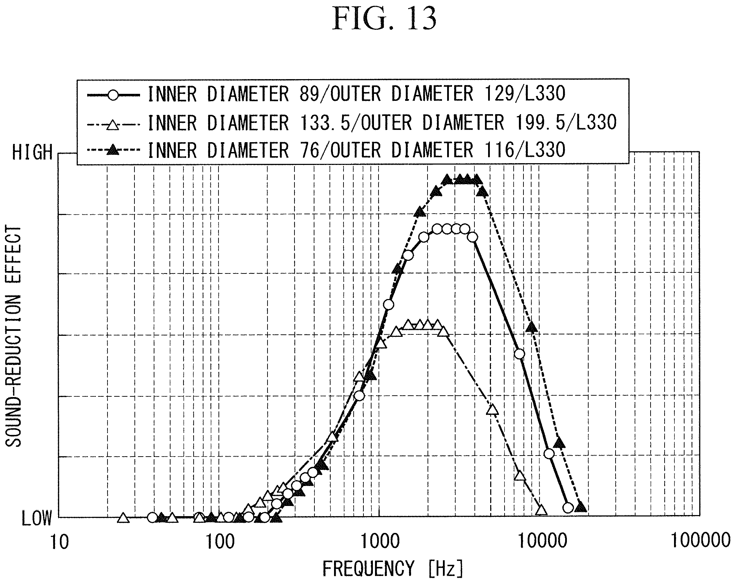

{Fig. 1} Fig. 1 is a diagram showing an embodiment of a turbocharger silencer according to the present invention and is a front view showing an internal cross-section of a portion of an example configuration in which a sound-absorbing pipe having a circular sectional shape is employed.
{Fig. 2} Fig. 2 is a longitudinal sectional view (cross-sectional view taken along C-C in Fig. 3) showing the turbocharger silencer shown in Fig. 1.
{Fig. 3} Fig. 3 is a cross-sectional view taken along A-A in Fig. 2.
{Fig. 4} Fig. 4 is a cross-sectional view taken along B-B in Fig. 2.
{Fig. 5} Fig. 5 is an enlarged view of the portion D in Fig. 3.
{Fig. 6} Fig. 6 is a perspective view showing the external appearance of an example configuration of the sound-absorbing pipe employed in the present invention.
{Fig. 7} Fig. 7 is a longitudinal sectional view showing an example configuration of an exhaust turbine turbocharger provided with the turbocharger silencer according to the present invention.
{Fig. 8} Fig. 8 is a cross-sectional view (corresponding to a cross-section taken along B-B in Fig. 2) showing a first modification of the sound-absorbing pipe of the turbocharger silencer according to the present invention, employing a sound-absorbing pipe having a rectangular sectional shape.
{Fig. 9} Fig. 9 is a cross-sectional view (corresponding to a cross-section taken along B-B in Fig. 2) showing a second modification of the sound-absorbing pipe of the turbocharger silencer according to the present invention, employing a sound-absorbing pipe having a hexagonal sectional shape.
{Fig. 10} Fig. 10 is a cross-sectional view (corresponding to a cross-section taken along B-B in Fig. 2) showing a third modification of the sound-absorbing pipe of the turbocharger silencer according to the present invention, employing a sound-absorbing pipe having a hexagonal sectional shape.
{Fig. 11} Fig. 11 is a cross-sectional view (corresponding to a cross-section taken along B-B in Fig. 2) showing a fourth modification of the sound-absorbing pipe of the turbocharger silencer according to the present invention, employing a sound-absorbing pipe having a hexagonal sectional shape.
{Fig. 12} Fig. 12 is a cross-sectional view (corresponding to a cross-section taken along B-B in Fig. 2) showing a fifth modification of the sound-absorbing pipe of the turbocharger silencer according to the present invention, employing sound-absorbing pipes that have a hexagonal sectional shape and that are arranged in a honeycomb arrangement.
{Fig. 13} Fig. 13 is a diagram showing the relationship between frequency and sound-reduction effect for three types of sound-absorbing pipe having different internal sizes and external sizes.

### {Description of Embodiment}

A turbocharger silencer according to an embodiment of the present invention will be described below with reference to Figs. 1 to 7.

Fig. 7 is a longitudinal sectional view showing an example configuration of an exhaust turbine turbocharger equipped with the turbocharger silencer according to the present invention, and the turbocharger silencer according to the present invention can be employed in such an exhaust turbine turbocharger 10.

The illustrated exhaust turbine turbocharger 10 is, for example, mounted to an unillustrated ship diesel engine (for example, a two-cycle low-speed diesel engine), and is an apparatus that supplies compressed air to an air-supply manifold (not shown) that communicates with the interior of a cylinder liner (not shown) that constitutes a part of the ship diesel engine.

As shown in Fig. 7, the exhaust turbine turbocharger 10 is formed by fastening together a gas-inlet casing 11, a gas-outlet casing 12, a bearing stand 13, and a compressor-side air-guiding casing 14 into a single unit by means of bolts (not shown). A rotor shaft 15 is rotatably supported in the bearing stand 13 by a thrust bearing 16 and radial bearings 17 and 18, a turbine 19 that constitutes a part of a turbine unit is firmly connected to a first end of the rotor shaft 15, and a compressor impeller (impeller) 20 that constitutes a part of a compressor section is firmly connected to a second end of the rotor shaft 15.

The turbine 19 at the first end has numerous blades 19a at an outer-circumferential portion thereof. These blades 19a are disposed between an exhaust-gas introducing path 22 provided in the gas-inlet casing 11 and an exhaust-gas ejecting path 23 provided in the gas-outlet casing 12.

On the other hand, the compressor impeller 20 at the second end has numerous blades 20a at an outer-circumferential portion thereof. These blades 20a are disposed rearward from an intake-air introducing path 24 provided in the air-guiding casing 14. The intake-air introducing path 24 is connected to a spiral chamber 25 via the compressor impeller 20, and then, the spiral chamber 25 is connected to a combustion chamber of the engine via an unillustrated intake-air introducing path.

The above-described exhaust turbine turbocharger 10 is provided with a turbocharger silencer 30 on the upstream side of the intake-air introducing path 24. This turbocharger silencer 30 is an apparatus that is installed at a preceding stage (upstream side) through which intake air to be compressed at the compressor section is taken into the intake-air introducing path 24, that is to say, at the upstream side of the inlet of the intake-air introducing path 24, and has a filtering function for allowing the intake air to pass therethrough to rectify the airflow and a silencing function for absorbing noise generated at the compressor impeller.

As shown in Figs. 1 to 7, the turbocharger silencer 30 of this embodiment is provided with an intake-air inlet opening 32 that is formed at an outer circumferential surface of a casing 31 having a substantially cylindrical shape; an intake-air channel 33 that guides the intake air, which is introduced from the intake-air inlet opening 32, to the intake-air introducing path 24 by changing the direction of the intake air by substantially 90°; an intake-air outlet opening 34 formed at one end surface of the casing 31; sound-absorbing pipes 40 that are installed in the intake-air inlet opening 32 by inserting them from the outer-circumference side of the casing; and air holes 51 that are substantially coaxial with the sound-absorbing pipes 40; and is equipped with support plates 50 that secure and support the sound-absorbing pipes 40 inserted into predetermined positions of the intake-air inlet opening 32.

At the outer-circumference side of the intake-air inlet opening 32, a filter 35 and an expanded metal member 36 are provided in this order from the outer side in order to prevent foreign objects from entering together with the intake air. In this case, the expanded metal member 36 serves as a member that maintains the shape of the filter 35 and is attached to an appropriate portion of the casing 31 in a detachable manner.

The support plates 50 of this embodiment include an outer support plate 52 and an inner support plate 53 so as to support the sound-absorbing pipes 40, which serve as silencer elements (sound-absorbing bodies), near both ends of the sound-absorbing pipes 40. However, the sound-absorbing pipes 40 may be supported at both ends and center portions thereof. Numerous air holes 51, into which the sound-absorbing pipes 40 are inserted and by which the sound-absorbing pipes 40 are supported, are drilled in the outer support plate 52 and the inner support plate 53 so as to be arranged in the radial direction.

The casing 31 is formed in a substantially cylindrical shape by disposing two disks 31a and 31b facing each other and joining them with a plurality of outer rod-like members 31c and the inner support plate 53. However, this joining structure is not particularly limited to the aforementioned structure.

The outer rod-like members 31c are members that join the disks 31a and 31b with each other near the outer-circumferential edges thereof, and are disposed at substantially equal pitch in the circumferential direction. In this case, welding or fastening by means of bolts can be employed to join the rod-like members 31c and disks 31a and 31b. In the casing 31 of this embodiment, the side with the disk 31a that serves as a front panel has a welded structure and the side with the disk 31b that serves as a rear panel has a bolt-fastened structure.

The outer support plate 52 of the support plates 50 is divided into multiple sections in the circumferential direction in accordance with the arrangement of the rod-like members 31c. This outer support plate 52 can be attached to and detached from the outer side with respect to the rod-like members 31c by, for example, by fastening the plate 52 with bolts or the like.

On the other hand, the inner support plate 53 of the support plate 50 is a member that joins the disks 31a and 31b with each other near an intermediate portion in the circumferential direction of the disks 31a and 31b. This inner support plate 53 is a member that is molded into, for example, a cylindrical shape and in which the air holes 51 similar to those of the outer support plate 52 are formed, and is secured to the disks 31a and 31b by being fastened by means of bolts or the like.

The intake-air channel 33 is a space for guiding the intake air, which is introduced from the intake-air inlet opening 32, to the intake-air introducing path 24 by changing the direction of the intake air by substantially 90°. Specifically, the intake-air channel 33 changes the flow direction of the intake air that has flowed in from the intake-air inlet opening 32 and that has passed through the sound-absorbing pipes 40 by substantially 90° in the space at the inner-circumference side of the inner support plate 53, thereby guiding the intake air to the intake-air outlet opening 34.

Because the intake-air outlet opening 34 is formed at the end surface of the casing 31 and is joined with the intake-air introducing path 24, it serves as an exit from which the intake air is supplied to the compressor section.

As shown in Fig. 6, the sound-absorbing pipe 40 is a cylindrically-shaped member having a sectional structure with at least three layers. Specifically, in the sound-absorbing pipe 40, the cylindrical shape that serves as a reinforcing member (base material) is formed by using an expanded metal member, this cylinder is covered with a sound-absorbing material made of a glass wool by placing the glass cloth (not shown) at the outer periphery of the cylinder, and, subsequently, the outer periphery of the sound-absorbing material is further covered with an outer circumferential material, such as an aluminum foil or the like.

In the state in which the filter 35, the expanded metal member 36, and the outer support plate 52 are removed, the sound-absorbing pipes 40 are installed in the intake-air inlet opening 32 by inserting them from the outer-circumference side thereof in the radial direction. In the state in which the sound-absorbing pipes 40 are attachable in this way, the numerous air holes 51 are open.

With the illustrated example configuration (see Fig. 4 and so forth), in a single section of the outer support plate 52, two rows of seven sound-absorbing pipes 40 are disposed side-by-side in the width direction in a staggered manner; however, the arraying of the sound-absorbing pipes 40 in a single section is not particularly limited to the aforementioned pattern. Note that sound-absorbing pipes 40' that are split in half are used at both ends of one of the rows.

The sound-absorbing pipes 40 are inserted radially inward from the intake-air outlet opening 34 toward the air holes 51 in the inner support plate 53. Because the air holes 51 in the inner support plate 53 consequently position the sound-absorbing pipes 40 by supporting one end thereof, it is possible to sequentially and easily insert all of the sound-absorbing pipes 40. Therefore, not only during the initial assembly, but also during maintenance after having installed in the exhaust turbine turbocharger 10, the sound-absorbing pipes 40 can easily be replaced by removing the filter 35, the expanded metal member 36, and the outer support plate 52.

Specifically, the turbocharger silencer 30 of this embodiment has a structure in which the support plates 50 include the outer support plate 52 and the inner support plate 53 that support the sound-absorbing pipes 40 near both ends of the sound-absorbing pipes 40 and in which the outer support plate 52 is attached from outside in a detachable manner. Accordingly, by removing the outer support plate 52 when performing installation work or work for replacing the sound-absorbing pipes 40, such work can easily be performed by inserting or removing the sound-absorbing pipes 40 from the outer-circumference side of the casing 31.

In addition, as shown in Fig. 5 for example, at least one of an inlet and an outlet, which correspond to the two ends of the sound-absorbing pipe 40 is provided with a curved portion 52a at the inner-circumferential angular portion thereof. The curved portion 52a shown in Fig. 5 is formed by processing an end of the outer support plate 52, in which the air holes 51 are drilled, into a curved shape, and the curved portion 52a reduces pressure loss of the intake air that passes through the sound-absorbing pipes 40 by smoothing the flow of the intake air that flows into the sound-absorbing pipes 40.

Such curved portions 52a are formed by applying inward bending (toward the center of sound-absorbing pipes 40 in the axial direction thereof), by means of pressing or the like, to at least one of the edges of the air holes 51 provided in the outer support plate 52 and the inner support plate 53.

In addition, it is preferable that the ends of the sound-absorbing pipes 40 be shaped as curved portions 41 so as to match the curved portions 52a of the outer support plate 52 or curved portions of the inner support plate 53. By engaging with the curved portions 52a or the curved portions of the inner support plate 53, such curved portions 41 can prevent positional displacement caused by vibrations or the like during operation.

Furthermore, when the curved portions are provided in the inner support plate 53, the curved portions provided at the inner side at the ends of the sound-absorbing pipes 40 also serve to make positioning during insertion easier.

As described above, in the turbocharger silencer 30 of this embodiment, because the cylindrically-shaped sound-absorbing pipes 40 are made attachable/detachable through insertion or the like from the outer-circumference side, it is possible to easily perform installation work and work for replacing the sound-absorbing pipes 40. Therefore, the turbocharger silencer 30 of this embodiment enables a reduction in manufacturing costs and improves maintenance work by enhancing workability and so forth, ensuring sufficient sound-absorbing performance.

Also, the turbocharger silencer 30 of the exhaust turbine turbocharger 10 has a target frequency band of about 1 kHz to 2 kHz for silencing.

Fig. 13 is a diagram showing experimental results of three types of sound-absorbing pipes, which shows relationships between frequency and sound-reduction effect regarding the sound-absorbing pipes 40 that have the same length and that have a circular sectional shape, and the three types have different internal sizes and external sizes. Note that, with regard to external sizes and internal sizes used in the following description, in all cases, values thereof indicate diameters.

As is clear from Fig. 13, when the internal size of the sound-absorbing pipe 40 is increased, the peak within a frequency band in which the noise can be silenced and the sound-reduction effect (silencing level) are reduced, and, in contrast, when the internal size is decreased, the peak within a frequency band in which the noise can be silenced and the sound-reduction effect are increased. Therefore, because the sound-reduction effect is considerably reduced when the internal size of the sound-absorbing pipe 40 is increased to a diameter of about 133.5 mm, it is not advantageous to use a large internal size equal to or greater than that.

In contrast, with regard to the external size of the sound-absorbing pipe 40, although the sound-reduction effect (silencing performance) increases with a decrease in the external size, it is not possible to make it extremely small from the viewpoint of the pressure loss and cost. Specifically, in the case in which the internal size is a diameter of about 75 mm, if the number of pipes is increased in order to suppress an increase in pressure loss, because the external size is decreased as compared with the case in which the internal size is set at a diameter of 89 mm, the cost is increased by about 1.4 times due to the increase in the number of pipes, which is disadvantageous in terms of cost.

As a result, the internal size (diameter) suitable for the sound-absorbing pipe 40 is 75 mm to 130 mm.

In addition, in the case in which the sound-reduction effect is inadequate, it is conceivable, for example, to increase the external size relative to the suitable internal size, thus increasing the amount of sound-absorbing material by an amount corresponding to the increase in the difference (thickness) between the internal size and the external size. However, because it becomes difficult to increase the number of the sound-absorbing pipes 40 if the external size is increased in this way, it consequently becomes difficult to make it feasible from the viewpoint of pressure loss. Therefore, it is considered preferable that the ratio of the internal size to the external size be 60 to 70 %. Note that the ratios of the internal size to the external size for the sound-absorbing pipes 40 shown in Fig. 13 are about 66 % with an internal size of 76 mm, about 69 % with an internal size of 89 mm, and about 67 % with an internal size of 133.5 mm.

Specifically, with the sound-absorbing pipe 40 having a circular sectional shape, based on the frequency band of sound to be silenced and the size of the sound-absorbing pipe that allows a practical arrangement of the pipes, it is preferable that the ratio of the internal size to the external size be 60 to 70 %, and the internal size (diameter) of the sound-absorbing pipe 40 that is suitable in this case is 75 mm to 130 mm.

Although the sound-absorbing pipe 40 of the embodiment described above has a three-layered sectional shape including the cylindrically-shaped reinforcing member formed of the expanded metal member, the sound-absorbing pipe 40 may be configured to have a tubular shape with a sectional structure including at least two layers, namely, a sound-absorbing material and an outer circumferential material that covers the outer periphery of this sound-absorbing material. In addition, even in the case of a sound-absorbing pipe having a three-layered sectional shape, the reinforcing member is not limited to the tubular shape as in the above-described embodiment. For example, the sound-absorbing pipe may have a structure in which a plurality of ring-like members are joined together.

In addition, the sectional shape of the sound-absorbing pipe is also not limited to the circular sectional shape (cylindrical shape) of the above-described embodiment. For example, tubular shapes having sectional shapes of first to fifth modifications, which are described below, may be employed. In these cases, if a reinforcing member is provided, ones having the same or similar sectional shape is normally used.

Sound-absorbing pipes 40A of the first modification shown in Fig. 8 have a tubular shape with a rectangular sectional shape, for example, a square, an oblong, or the like. In the illustrated example configuration, although the sound-absorbing pipes 40A are placed side-by-side in two rows, the arrangement is not limited thereto.

Also, although sound-absorbing pipes 40B of second to fifth modifications shown in Fig. 9 to Fig. 12 all have tubular shapes with a hexagonal sectional shape, the individual modifications differ from each other in terms of the arrangement of the hexagons placed in two rows (orientations and combining directions). Note that, in the cases shown in Figs. 11 and 12, sound-absorbing pipes 40B' whose hexagonal sections are split in half are also used.

In particular, in the fifth modification shown in Fig. 12, because the sound-absorbing pipes 40B having the hexagonal sectional shape are in a honeycomb arrangement, this makes it possible to achieve an arrangement in which the installation space of the sound-absorbing pipes is utilized effectively. Specifically, by arranging the sound-absorbing pipes 40B having the hexagonal sectional shape in a honeycomb arrangement, a turbocharger silencer having a higher sound-absorption efficiency can be realized with the same size.

As has been described above, with a sound-absorbing pipe having a rectangular sectional shape or a hexagonal sectional shape, it is preferable that the ratio of the distance between opposing sides on the interior to the distance between opposing sides on the exterior be 60 to 70 %, and the distance between the opposing sides on the interior of the sound-absorbing pipe that is suitable in this case is optimally 75 mm to 130 mm.

Note that the present invention is not limited to the above-described embodiment, and appropriate alterations are permissible within a range that does not depart from the scope thereof.

### {Reference Signs List}

10 exhaust turbine turbocharger
19 turbine
20 compressor impeller
24 intake-air introducing path
30 turbocharger silencer
31 casing
31a, 31b disk
31c outer rod-like member
32 intake-air inlet opening
33 intake-air channel
34 intake-air outlet opening
35 filter
36 expanded metal member
40, 40', 40A, 40B, 40B' sound-absorbing pipe
50 support plate
51 air hole
52 outer support plate
52a rounded portion

## Claims

1. A turbocharger silencer (30) that is installed at an upstream side of an inlet of an intake-air introducing path for introducing intake air to be compressed at a compressor section, the turbocharger silencer comprising:
an intake-air inlet opening (32) formed at an outer circumferential surface of a casing (31) having two disks (31a, 31b) facing each other; an intake-air channel (33) that guides the intake air to the intake-air introducing path by changing a flow direction of the intake air by substantially 90°, the intake air being introduced from the intake-air inlet opening (32);
an intake-air outlet opening (34) formed at one end surface of the casing;
a plurality of sound-absorbing pipes (40) installed in the intake-air inlet opening (32);
a plurality of air holes (51) that are substantially coaxial with the sound-absorbing pipes (40); and
a support plate (50) that secures and supports the sound-absorbing pipes (40) at a predetermined position in the intake-air inlet opening (32),
wherein the support plate (50) is provided with the plurality of air holes (51), and an edge of the air holes (51) is formed to be inwardly curved,
wherein the support plate (50) includes an outer support plate (52) and an inner support plate (53) that support the sound-absorbing pipes (40) near both ends thereof,
wherein the outer support plate (52) and the inner support plate (53) are equipped with the plurality of the air holes (51) respectively, and
wherein the inner support plate (53) is formed in a cylindrical shape,
**characterized in that**
the air holes (51) in the inner support plate (53) position the sound-absorbing pipes (40) by supporting one end of the sound-absorbing pipes (40) inserted in the air holes (51) in the inner support plate (53), and
a plurality of rod-like members (31c) connecting the two disks (31a, 31b) of the casing (31) are arranged in a circumferential direction,
wherein the outer support plate (52) is detachably attached to the rod-like members (31c) from outside and secures by being fastened the plurality of sound-absorbing pipes (40).

2. The turbocharger silencer (30) according to Claim 1, wherein the support plate (50) is divided into a plurality of sections in a circumferential direction by the rod-like members (31c).

3. The turbocharger silencer (30) according to Claim 1 or 2, wherein a curved portion is provided at an inner-circumferential angular portion of at least one of an inlet and an outlet of the sound-absorbing pipes (40).

4. The turbocharger silencer (30) according to any one of Claims 1 to 3, wherein the sound-absorbing pipes (40) are configured to have a tubular shape with a sectional structure which has at least two layers having a sound-absorbing material and an outer circumferential material that covers an outer periphery of the sound-absorbing material.

5. The turbocharger silencer (30) according to any one of Claims 1 to 3, wherein the sound-absorbing pipes (40) are configured to have a tubular shape with a sectional structure which has at least three layers having a reinforcing member, a sound-absorbing material provided to cover an outer periphery of the reinforcing member, and an outer circumferential material that covers an outer periphery of the sound-absorbing material.

6. The turbocharger silencer (30) according to Claim 4 or 5, wherein the sound-absorbing pipes (40) have a circular sectional shape.

7. The turbocharger silencer (30) according to Claim 4 or 5, wherein the sound-absorbing pipes (40) have a rectangular sectional shape.

8. The turbocharger silencer (30) according to Claim 4 or 5, wherein the sound-absorbing pipes (40) have a hexagonal sectional shape.

9. The turbocharger silencer (30) according to any one of Claims 6 to 8, wherein, in the sound-absorbing pipes (40), a ratio of a distance between opposing sides on the interior thereof to a distance between opposing sides on the exterior thereof is 60 to 70 %.

10. The turbocharger silencer (30) according to any one of Claims 6 to 8, wherein, in the sound-absorbing pipes (40), the distance between opposing sides on the interior thereof is 75 mm to 130 mm.

## Patentansprüche

1. Turbolader-Schalldämpfer (30), der an einer stromaufwärts gelegenen Seite eines Einlasses eines Ansauglufteinleitungspfades zum Einleiten von zu verdichtender Einlassluft an einem Verdichterabschnitt installiert ist, wobei der Turbolader-Schalldämpfer umfasst:
eine Ansauglufteinlassöffnung (32), die an einer äußeren Umfangsfläche eines Gehäuses (31), das zwei einander gegenüberliegende Scheiben (31a, 32b) aufweist, gebildet ist;
einen Ansaugluftkanal (33), der die Ansaugluft zu dem Ansauglufteinleitungspfad leitet, indem er eine Strömungsrichtung der Ansaugluft um im Wesentlichen 90° ändert, wobei die Ansaugluft von der Ansauglufteinlassöffnung (32) eingeleitet wird;
eine an einer Endfläche des Gehäuses gebildete Ansaugluftauslassöffnung (34);
eine Vielzahl von in der Ansauglufteinlassöffnung (32) installierten schallabsorbierenden Rohren (40);
eine Vielzahl von Luftlöchern (51), die im Wesentlichen koaxial mit den schallabsorbierenden Rohren (40) sind; und
eine Stützplatte (50), die die schallabsorbierenden Rohre (40) an einer vorgegebenen Position in der Ansauglufteinlassöffnung (32) sichert und stützt, wobei die Stützplatte (50) mit der Vielzahl von Luftlöchern (51) versehen ist und ein Rand der Luftlöcher (51) so geformt ist, dass er nach innen gekrümmt ist, wobei die Stützplatte (50) eine äußere Stützplatte (52) und eine innere Stützplatte (53) beinhaltet, die die schallabsorbierenden Rohre (40) in Nähe beider Enden davon stützen,
wobei die äußere Stützplatte (52) und die innere Stützplatte (53) jeweils mit der Vielzahl von Luftlöchern (51) ausgerüstet sind, und
wobei die innere Stützplatte (53) zylinderförmig ist,
**dadurch gekennzeichnet, dass**
die Luftlöcher (51) in der inneren Stützplatte (53) die schallabsorbierenden Rohre (40) positionieren, indem sie ein in die Luftlöcher (51) in der inneren Stützplatte (53) eingebrachtes Ende stützen, und
eine Vielzahl stabartiger Elemente (31c), die die zwei Scheiben (31a, 31b) des Gehäuses (31) verbinden, in einer Umfangsrichtung angeordnet sind,
wobei die äußere Stützplatte (52) abnehmbar von außen an den stabartigen Elementen (31c) angebracht ist und, indem sie befestigt ist, die Vielzahl schallabsorbierender Rohre (40) sichert.

2. Turbolader-Schalldämpfer (30) nach Anspruch 1,
wobei die Stützplatte (50) von den stabartigen Elementen (31c) in einer Umfangsrichtung in eine Vielzahl von Abschnitten unterteilt wird.

3. Turbolader-Schalldämpfer (30) nach Anspruch 1 oder 2,
wobei ein gekrümmter Bereich an einem Innenumfangs-Winkelbereich mindestens eines von einem Einlass und einem Auslass der schallabsorbierenden Rohre (40) angebracht ist.

4. Turbolader-Schalldämpfer (30) nach einem der Ansprüche 1 bis 3, wobei die schallabsorbierenden Rohre (40) so eingerichtet sind, dass sie eine röhrenförmige Gestalt mit einem Querschnittsaufbau haben, der mindestens zwei Lagen aufweist, mit einem schallabsorbierenden Material und einem äußeren Umfangsmaterial, das einen Außenumfang des schallabsorbierenden Materials bedeckt.

5. Turbolader-Schalldämpfer (30) nach einem der Ansprüche 1 bis 3, wobei die schallabsorbierenden Rohre (40) so eingerichtet sind, dass sie eine röhrenförmige Gestalt mit einem Querschnittsaufbau haben, der mindestens drei Lagen aufweist, mit einem Verstärkungselement, einem schallabsorbierenden Material, das zum Bedecken eines Außenumfangs des Verstärkungselements angebracht ist, und einem äußeren Umfangsmaterial, das einen Außenumfang des schallabsorbierenden Materials bedeckt.

6. Turbolader-Schalldämpfer (30) nach Anspruch 4 oder 5, wobei die schallabsorbierenden Rohre (40) eine kreisförmige Querschnittsform haben.

7. Turbolader-Schalldämpfer (30) nach Anspruch 4 oder 5, wobei die schallabsorbierenden Rohre (40) eine rechteckige Querschnittsform haben.

8. Turbolader-Schalldämpfer (30) nach Anspruch 4 oder 5, wobei die schallabsorbierenden Rohre (40) eine sechseckige Querschnittsform haben.

9. Turbolader-Schalldämpfer (30) nach einem der Ansprüche 6 bis 8, wobei in den schallabsorbierenden Rohren (40) ein Verhältnis eines Abstands zwischen gegenüberliegenden Seiten an der Innenseite davon zu einem Abstand zwischen gegenüberliegenden Seiten an der Außenseite davon 60 bis 70 % beträgt.

10. Turbolader-Schalldämpfer (30) nach einem der Ansprüche 6 bis 8, wobei in den schallabsorbierenden Rohren (40) der Abstand zwischen entgegengesetzten Seiten an der Innenseite davon 75 mm bis 130 mm beträgt.

## Revendications

1. Silencieux de turbocompresseur (30) qui est installé au niveau d'un côté amont d'une entrée d'un chemin d'introduction d'air d'admission pour introduire de l'air d'admission à comprimer au niveau d'une section de compresseur, le silencieux de turbocompresseur comprenant :
une ouverture d'entrée d'air d'admission (32) formée au niveau d'une surface circonférentielle extérieure d'une enveloppe (31) ayant deux disques (31a, 31b) se faisant face ;
un canal d'air d'admission (33) qui guide l'air d'admission vers le chemin d'introduction d'air d'admission en changeant une direction de flux de l'air d'admission de sensiblement 90°, l'air d'admission étant introduit depuis l'ouverture d'entrée d'air d'admission (32) ;
une ouverture de sortie d'air d'admission (34) formée au niveau d'une surface d'extrémité de l'enveloppe ;
une pluralité de tuyaux d'absorption phonique (40) installés dans l'ouverture d'entrée d'air d'admission (32) ;
une pluralité d'évents (51) qui sont sensiblement coaxiaux avec les tuyaux d'absorption phonique (40) ; et
une plaque de support (50) qui fixe et supporte les tuyaux d'absorption phonique (40) à une position prédéterminée dans l'ouverture d'entrée d'air d'admission (32),
dans lequel la plaque de support (50) est munie de la pluralité d'évents (51), et un bord des évents (51) est formé pour être courbé vers l'intérieur,
dans lequel la plaque de support (50) inclut une plaque de support extérieure (52) et une plaque de support intérieure (53) qui supportent les tuyaux d'absorption phonique (40) près des deux extrémités de ces derniers,
dans lequel la plaque de support extérieure (52) et la plaque de support intérieure (53) sont respectivement équipées de la pluralité des évents (51), et
dans lequel la plaque de support intérieure (53) est formée en une forme cylindrique,
**caractérisé en ce que**
les évents (51) dans la plaque de support intérieure (53) positionnent les tuyaux d'absorption phonique (40) en supportant une extrémité des tuyaux d'absorption phonique (40) insérée dans les évents (51) dans la plaque de support intérieure (53), et
une pluralité d'éléments semblables à des tiges (31c) reliant les deux disques (31a, 31b) de l'enveloppe (31) sont agencés dans une direction circonférentielle,
dans lequel la plaque de support extérieure (52) est attachée de façon amovible aux éléments semblables à des tiges (31c) à partir de l'extérieur et est fixée en étant attachée à la pluralité de tuyaux d'absorption phonique (40).

2. Silencieux de turbocompresseur (30) selon la revendication 1, dans lequel la plaque de support (50) est divisée en une pluralité de sections dans une direction circonférentielle par les éléments semblables à des tiges (31c).

3. Silencieux de turbocompresseur (30) selon la revendication 1 ou 2, dans lequel une portion courbée est prévue au niveau d'une portion angulaire circonférentielle intérieure d'au moins une d'une entrée et d'une sortie des tuyaux d'absorption phonique (40).

4. Silencieux de turbocompresseur (30) selon l'une quelconque des revendications 1 à 3, dans lequel les tuyaux d'absorption phonique (40) sont configurés pour avoir une forme tubulaire avec une structure en section transversale qui a au moins deux couches ayant une matière d'absorption phonique et une matière circonférentielle extérieure qui couvre une périphérie extérieure de la matière d'absorption phonique.

5. Silencieux de turbocompresseur (30) selon l'une quelconque des revendications 1 à 3, dans lequel les tuyaux d'absorption phonique (40) sont configurés pour avoir une forme tubulaire avec une structure en section transversale qui a au moins trois couches ayant un élément de renforcement, une matière d'absorption phonique prévue pour couvrir une périphérie extérieure de l'élément de renforcement, et une matière circonférentielle extérieure qui couvre une périphérie extérieure de la matière d'absorption phonique.

6. Silencieux de turbocompresseur (30) selon la revendication 4 ou 5, dans lequel les tuyaux d'absorption phonique (40) ont une section transversale de forme circulaire.

7. Silencieux de turbocompresseur (30) selon la revendication 4 ou 5, dans lequel les tuyaux d'absorption phonique (40) ont une section transversale de forme rectangulaire.

8. Silencieux de turbocompresseur (30) selon la revendication 4 ou 5, dans lequel les tuyaux d'absorption phonique (40) ont une section transversale de forme hexagonale.

9. Silencieux de turbocompresseur (30) selon l'une quelconque des revendications précédentes 6 à 8, dans lequel, dans les tuyaux d'absorption phonique (40), un rapport d'une distance entre des côtés opposés sur l'intérieur de ceux-ci et d'une distance entre des côtés opposés sur l'extérieur de ceux-ci est de 60 à 70 %.

10. Silencieux de turbocompresseur (30) selon l'une quelconque des revendications 6 à 8, dans lequel, dans les tuyaux d'absorption phonique (40), la distance entre des côtés opposés sur l'intérieur de ceux-ci est de 75 mm à 130 mm.
